**Europäisches Patentamt**

**European Patent Office**

**Office européen des brevets**

(19)

(11) Publication number : **0 411 861 B1**

# (12) EUROPEAN PATENT SPECIFICATION

(45) Date of publication of patent specification :
**31.03.93 Bulletin 93/13**

(51) Int. Cl.⁵ : **C07C 319/00, C10M 135/04**

(21) Application number : **90308342.6**

(22) Date of filing : **30.07.90**

(54) **Sulfurized olefin polymers soluble in polyalphaolefin lubricant oils.**

(30) Priority : **03.08.89 US 388844**

(43) Date of publication of application :
**06.02.91 Bulletin 91/06**

(45) Publication of the grant of the patent :
**31.03.93 Bulletin 93/13**

(84) Designated Contracting States :
**BE DE ES FR GB IT**

(56) References cited :
**EP-A- 0 159 936**
**EP-A- 0 201 197**
**EP-A- 0 215 610**

(56) References cited :
**EP-A- 0 271 368**
**EP-A- 0 281 692**
**US-A- 4 119 550**
**US-A- 4 472 306**

(73) Proprietor : **ETHYL CORPORATION**
**Ethyl Tower 451 Florida Boulevard**
**Baton Rouge Louisiana 70801 (US)**

(72) Inventor : **Culley, Scott Anthony**
**1821 Hobbiton Road**
**Baton Rouge, Louisiana 70810 (US)**

(74) Representative : **Collier, Jeremy Austin Grey et al**
**J.A.Kemp & Co. 14, South Square Gray's Inn**
**London WC1R 5EU (GB)**

## Description

This invention relates generally to sulfurized olefins which are useful as lubricating oil additives and more specifically to the preparation of chlorine free, polysulfurized olefins which have improved solubility in synthetic polyalphaolefin lubricating oils.

The preparation of polysulfurized olefin lubricant additives by reacting an olefin with sulfur in specific ratios at elevated temperatures and specific final pressures is disclosed in European patent application 0201197. The products are disclosed as having low copper corrosivity. Such products as well as those obtained using other reactant ratios generally have poor solubility in synthetic oils. Processes using sodium sulfide treatments have been disclosed for other sulfurized olefin products to reduce their corrosivity. Such processes are disclosed, for example, in U.S. Patents 2,959,581, 3,498,915 and 4,119,550. In U.S. Patent 4,645,610 the polyalphaolefin solubility of olefin polysulfides prepared using sulfur monochloride or dichloride-olefin adducts is reported to be improved by reaction with a hydrocarbyl halide, a metal or ammonium sulfide and, usually, elemental sulfur. Treatment with sulfide, or sulfide and sulfur, without n-butyl chloride reportedly did not provide a PAO soluble product at 5% by weight. Environmental concerns have been raised due to the presence of chlorine in such products.

I have now found that treating certain chlorine free olefin-sulfur reaction products with an aqueous alkali metal sulfide solution unexpectedly improves their solubility in synthetic polyalphaolefin (PAO) lubricating oils.

In accordance with this invention there is provided a process for preparing a chlorine free, sulfurized olefin comprising (i) reacting an aliphatic disubstituted monoolefin containing from 4 to 12 carbon atoms with a sulfurizing agent consisting essentially of elemental sulfur in gram mole of olefin to gram atom of sulfur ratios of from 2:1 to 1:2 at elevated temperature and pressure to form a sulfur-linked tertiary alkyl containing sulfurized olefin intermediate product and then (ii) treating the intermediate product with an aqueous solution of alkali metal sulfide so as to provide a chlorine free sulfurized olefin which is soluble in polyalphaolefin lubricating oil. By soluble is meant that the sulfurized olefin is soluble in an amount of at least 5 weight percent in the oil at a temperature of about 20°C.

Also there are provided the product prepared by the above process and a lubricating oil composition comprising a polyalphaolefin oil of lubricating viscosity having dissolved therein at least 0.2 percent by weight of said oil of the sulfurized olefin prepared by the above process.

The use of synthetic polyalphaolefin polymer oils in lubricants is increasing due to their higher stability and lower volatility compared to mineral oils. Especially useful are the hydrogenated liquid oligomers of $C_{6-12}$ alphaolefins such as alpha-decene trimer. The polymer oils are chosen to have the proper viscosity, i.e., from 2 to 100 cSt ($2.10^{-6}$ - $100.10^{-6}$ m²/s) at 100°C for use in lubricants.

The sulfurized olefin products of the invention are added to the base oils in amounts sufficient to improve the extreme pressure properties of the lubricant. Amounts of from 0.2 to 10.0 wt % are usually sufficient. The product of the invention can be used in mineral oils as well as synthetics.

Olefins useful in the process for preparing the sulfurized olefins according to the invention are disubstituted monoolefins which contain from 4 to 12 carbon atoms. By disubstituted monoolefins is meant monoolefins having at least one doubly bonded carbon atom having two alkyl substituents. These olefins provide products having a significant portion (10 to 30 percent or more) of sulfur linkages to tertiary carbons which are especially effective in providing good extreme pressure (EP) properties to synthetic lubricants. Examples of such olefins include isobutylene, 2-methyl-2-pentene, 2-methyl2-butene, 2- methyl-1-butene, diisobutylene, triisobutylene and propylene trimer with isobutylene being preferred.

The olefin is combined with elemental sulfur in ratios of 2:1 to 1:2 moles of olefin to gram atoms of sulfur in an autoclave or other reaction vessel which is suitable for conducting superatmospheric pressure and elevated temperature reactions. The reaction can be carried out at temperatures of from 100° to 200°C and autogenous pressures of from 250 to 1,000 psi (1724 to 6895 Kpa) for times ranging from 2 to 30 hours or more depending upon the reaction temperature. Preferred conditions are 140° to 180°C at pressures of from 550 to 800 psi (3792 to 5516 KPa) for 5-27 hours. The reaction can be carried with or without a catalyst. Suitable catalysts include, for example, amines and sulfur compounds such as dithiocarbamate salts and mercaptans. Examples of specific catalysts include n-butylamine, n-octylamine, triethylamine, tetramethylthiuram disulfide and mercaptobenzothiazole. The catalysts are used in amounts which generally range from 0.01 to 5.0 weight percent of the reaction mixture. The reaction is preferably carried out in the absence of oxygen. This can be accomplished by cooling the initial reaction mixture and purging the reactor with an inert gas such as nitrogen. After the reaction mixture has been heated for the time necessary to complete the reaction, the autoclave is vented through a caustic trap and sparged with nitrogen to remove the volatile materials including $H_2S$. If excess olefin is used then the reactor can be heated to distill off the olefin.

The sulfurized olefin intermediate product is then treated with an aqueous solution of alkali metal sulfide, such as sodium or potassium sulfide and preferably sodium sulfide, which can be prepared, for example, by mixing aqueous sodium hydrosulfide and aqueous sodium hydroxide solutions in amounts to produce from 2 to 50 and, preferably, a 10 to 20 weight percent aqueous solution of sodium sulfide. The solution can contain cosolvents such as methanol.

The sodium sulfide solution and the sulfurized intermediate are combined in a stirred reactor and heated under an inert atmosphere such as nitrogen at temperatures up to 100°C and preferably 50° to 100°C from 0.5 to 4 hours and preferably 1 to 2 hours. The reaction mixture is then allowed to cool and the organic product separated on top of the aqueous layer and was recovered. The sulfurized olefin is a mixture of compounds including alkyl polysulfides, alkyl alkenyl polysulfides, oligomers and cyclic sulfide type products. The sulfur content of the product preferably ranges from 40 to 50 weight percent.

The invention is further illustrated by, but is not intended to be limited to, the following examples in which parts and percentages are by weight unless otherwise indicated.

## Example 1A

A 300 mL stainless steel autoclave was charged with sulfur (35.0g, 1.09 gram atom) and n-butylamine (0.1 mL) as catalyst. The autoclave was sparged with nitrogen (4 x 100 psi (689 Kpa)) and cooled with a dry ice-isopropanol bath. Isobutylene (59.0g, 1.05 mol), was condensed into the autoclave. The autoclave was heated to 180°C and held at 100°C for five hours at a pressure of 800 psi (5516 Kpa) and then allowed to stand overnight. The autoclave was then heated to 100°C and vented to a caustic scrubber and a cold trap. The product was filtered using a filter aid (Celite-diatomaceous earth). The isolated yield was 90%. The product contained 42 wt percent sulfur.

## Example 1B

An 18 wt percent sodium sulfide stock solution prepared by mixing sodium hydrosulfide (10.0g, 46% aq), sodium hydroxide (6.6g, 50% aq), and water (19.4g) was made up. A portion of the product of Example 1A (20.0g) and 20g of the stock solution were charged into a 100 mL round bottom flask equipped with an overhead stirrer and a reflux condenser. The solution was stirred vigorously and heated to 60°C under $N_2$. The solution was then poured into a separatory funnel and allowed to stand overnight. The product (17.1g, 86%) was separated from the lower aqueous layer. The product contained 39 wt percent sulfur.

## Example 2A

A 300 mL stainless steel autoclave was charged with sulfur (32g, 1.0 gram atom) and tetramethylthiuram disulfide (0.82g) as catalyst. The autoclave was sparged with nitrogen (4 x 100 psi (689 Kpa)) and cooled with a dry ice-isopropyl alcohol bath. Isobutylene (65g, 2.03 mol) was condensed into the autoclave. The autoclave was heated to 150°C for four hours and then to 175°C for 3 hours. The autoclave was cooled to 100°C and sparged with nitrogen through a caustic trap and a cold trap. The product was isolated in a yield of 52 percent after filtration through filter aid and had a sulfur content of 47 wt percent.

## Example 2B

The partial desulfurization of the product of Example 2A was carried out as described in Example 1B except using 15 gram quantities of the sodium sulfide solution and the sulfurized isobutylene. The product was isolated in 88 percent yield and had a sulfur content of 44.6 wt percent.

## Example 3A

A 300 mL stainless steel autoclave was charged with sulfur (67.2g, 1.92 gram atoms) and 0.1 mL n-butylamine (1.0 mmol). The autoclave was cooled in a dry ice isopropyl alcohol bath and sparged (4 x 100 psi (689 Kpa)) with $N_2$. Isobutylene (58.8g, 1.05 mole) was condensed into the autoclave. The autoclave was sealed and heated to 140°C under an autogeneous pressure of 550 psi (3792 Kpa) for 26.5 hours. After standing overnight the autoclave was vented to a caustic trap and a condenser cooled in dry ice and then heated to 100°C and sparged with $N_2$ for 0.5 hours. The amber liquid left in the autoclave was filtered through filter aid giving a yield of 95%. The sulfur content of the product was 55 wt percent.

Example 3B

A 100 mL round bottom flask equipped with an overhead stirrer and reflux condenser was charged with sodium hydrosulfide (10.8g, 46% aq) and sodium hydroxide (12.0g, 50% aq), and the sulfurized product prepared in Example 3A (20g). The solution was vigorously stirred and heated to 80°C for 2 hours and 100°C for 2 hours. After cooling, the solution was taken up in diethyl ether and poured into a separatory funnel. The organic layer was collected, dried, and the solvent evaporated to give 9.6g (50%) of the partially desulfurized product which contained 44 wt percent sulfur.

Example 4A

The procedure of Example 3A was repeated except that the autoclave was heated to 160°C under autogeneous pressure of 660 psi (4550 Kpa) for five hours. The yield was 95 percent and the sulfur content of the product was 54 percent.

Example 4B1

The procedure of Example 3B was repeated using the product of Example 4A except that the heating was at 60°C for 0.9 hour. The yield was 74% of product heaving a sulfur content of 49 wt percent.

Example 4B2

The procedure of Example 4B1 was repeated with a different portion of the product of Example 4A except that the heating was at 100°C for 1 hour. The partially desulfurized product was obtained in a yield of 77 percent and had a sulfur content of 47.5 weight percent.

Example 4B3

The procedure of Example 4B1 was repeated with a different portion of the product of Example 4A except that the heating was at 60°C for 1 hour and then 100°C for 1.5 hours. The yield was 66% and the product had a sulfur content of 43%. The sulfurized isobutylene products prepared in the above examples were tested for solubility in a clear polyalphaolefin oil at about 20°C, i.e., normal ambient room temperature at a level of 5 wt percent additive. The polyalphaolefin used was a hydrogenated synthetic hydrocarbon having a viscosity of 40 cSt (40.10$^{-6}$ m/s) at 100°C and a specific gravity at 15.6/15.6°C of 0.85. If the liquid additive makes the oil hazy then the additive is considered to have poor solubility. If the PAO remains clear or has only a slight haze when the sulfurized isobutylene is mixed with the oil then the additive is considered to be soluble. The standard copper corrosion test (CCT), 4-Ball EP Wear and Load Wear Index tests were also run using the products of Examples 4B1, 2 and 3. The results of the solubility, CCT, EP and Wear tests are reported in Table I below.

TABLE I

| Example | wt % Sulfur | CCT | PAO Sol | 4 Ball EP (kg) | 4 Ball Wear mm | Load Wear Index |
|---------|-------------|-----|---------|----------------|----------------|-----------------|
| 1A | 42 | 130 | Hazy | -- | -- | -- |
| 1B | 39 | 15 | Slt Haze | -- | -- | -- |
| 2A | 47 | 485 | Hazy | -- | -- | -- |
| 2B | 44.6 | 24 | Clear | -- | -- | -- |
| 3A | 55 | 824 | Hazy | -- | -- | -- |
| 3B | 44 | 0 | Clear | -- | -- | -- |
| 4A | 54 | 800 | Hazy | -- | -- | -- |
| 4B1 | 49 | 386 | Slt Haze | 315 | .600 | 53.5 |
| 4B2 | 47.5 | 257 | Slt Haze | 315 | .625 | 55.2 |
| 4B3 | 43 | 84 | Slt Haze | 315 | .575 | 50.5 |

The results in Table I show that the treatment with Na₂S provided PAO soluble products having acceptable CCT, EP and antiwear properties for lubricant use.

## Claims

1. A process for preparing a chlorine free, sulfurized olefin comprising (i) reacting an aliphatic disubstituted monoolefin containing from 4 to 12 carbon atoms with a sulfurizing agent consisting essentially of elemental sulfur in gram mole of olefin to gram atom of sulfur ratios of from 2:1 to 1:2 at elevated temperature and pressure to form a sulfur-linked tertiary alkyl containing sulfurized olefin intermediate product and (ii) treating the intermediate product with an aqueous solution of alkali metal sulfide so as to provide a chlorine free, sulfurized olefin which is soluble in polyalphaolefin lubricating oil in an amount of at least 5 weight percent at 20°C.

2. The process of claim 1 wherein said temperature is from 100°C to 200°C and said pressure is from 250 to 1,000 psi (1724 to 6895 kPa).

3. The process of claim 2 wherein said temperature is from 140°C to 180°C, said pressure is from 550 to 800 psi (3792 to 5516 kPa).

4. The process of any of the preceding claims wherein step (ii) is carried out at a temperature of from 50°-100°C for from 0.5 to 4 hours.

5. The process of any of the preceding claims wherein said olefin is isobutylene.

6. The process of any of the preceding claims wherein said alkali metal sulfide is sodium sulfide.

7. The process of any of the preceding claims wherein the chlorine free sulfurized olefin has a sulfur content of from 40 to 50 weight percent.

8. A chlorine free sulfurized olefin prepared by the process of any of the preceding claims.

9. A lubricating oil composition comprising a poly-alphaolefin oil of lubricating viscosity having dissolved therein from 0.2 to 10.0 wt percent a chlorine free, sulfurized olefin prepared according to the process of any of claims 1 to 7.

10. A lubricating oil composition according to claim 9 wherein at least 5 wt percent of said chlorine free, sulfurized olefin is dissolved in said oil.


**Patentansprüche**

1. Verfahren zur Herstellung eines chlorfreien, sulfurierten Olefins, welches die Schritte umfaßt, daß man
(i) ein aliphatisches disubstituiertes Monoolefin, das 4 bis 12 Kohlenstoffatome enthält, mit einem Sulfurierungsmittel, das im wesentlichen aus elementarem Schwefel besteht, in Verhältnissen Grammol Olefin : Grammatom Schwefel von 2 : 1 bis 1 : 2 bei erhöhter Temperatur und erhöhtem Druck unter Bildung eines schwefelgebundenen, eine tertiäre Alkylgruppe enthaltenden, sulfurierten Olefin-Zwischenproduktes umsetzt, und
(ii) das Zwischenprodukt mit einer wäßrigen Lösung eines Alkalimetallsulfids unter Bereitstellung eines chlorfreien, sulfurierten Olefins behandelt, das in einem Poly-α-olefin-Schmieröl in einer Menge von wenigstens 5 Gew.-% bei 20 °C löslich ist.

2. Verfahren nach Anspruch 1, worin die Temperatur im Bereich von 100 °C bis 200 °C liegt und der Druck im Bereich von 250 bis 1.000 psi (1.724 bis 6.895 kPa) liegt.

3. Verfahren nach Anspruch 2, worin die Temperatur im Bereich von 140 °C bis 180 °C liegt und der Druck im Bereich von 550 bis 800 psi (3.792 bis 5.516 kPa) liegt.

4. Verfahren nach irgendeinem der vorangehenden Ansprüche, worin Schritt (ii) bei einer Temperatur im Bereich von 50 °C bis 100 °C für eine Zeit von 0,5 bis 4 Stunden durchgeführt wird.

5. Verfahren nach irgendeinem der vorangehenden Ansprüche, worin das Olefin Isobutylen ist.

6. Verfahren nach irgendeinem der vorangehenden Ansprüche, worin das Alkalimetallsulfid Natriumsulfid ist.

7. Verfahren nach irgendeinem der vorangehenden Ansprüche, worin das chlorfreie sulfurierte Olefin einen Schwefelgehalt von 40 bis 50 Gew.-% aufweist.

8. Chlorfreies, sulfuriertes Olefin, hergestellt durch das Verfahren nach irgendeinem der vorangehenden Ansprüche.

9. Schmierölzubereitung, welche ein Poly-α-olefin-Öl mit Schmierviskosität umfaßt, das darin gelöst 0,2 bis 10 Gew.-% eines chlorfreien, sulfurierten Olefins enthält, das gemäß dem Verfahren nach irgendeinem der Ansprüche 1 bis 7 hergestellt wurde.

10. Schmierölzubereitung nach Anspruch 9, worin wenigstens etwa 5 Gew.-% des chlorfreien, sulfurierten Olefins in dem Öl gelöst sind.

**Revendications**

1. Procédé de préparation d'une oléfine sulfurée, dépourvue de chlore, comprenant (i) la réaction d'une mono-oléfine disubstituée aliphatique contenant 4 à 12 atomes de carbone avec un agent de sulfuration consistant essentiellement en soufre élémentaire en un rapport du nombre de molécules-grammes d'oléfine au nombre d'atomes-grammes de soufre compris dans l'intervalle de 2:1 à 1:2 à température élevée et sous haute pression pour former un produit intermédiaire du type oléfine sulfurée contenant des groupes tertio-alkyle liés avec le soufre, et (ii) le traitement du produit intermédiaire avec une solution aqueuse d'un sulfure de métal alcalin de manière à produire une oléfine sulfurée, dépourvue de chlore, qui est soluble dans une huile lubrifiante poly-alpha-oléfinique en une quantité d'au moins 5 % en poids à 20°C.

2. Procédé suivant la revendication 1, dans lequel la température est comprise dans l'intervalle de 100°C à 200°C et la pression est comprise dans l'intervalle de 250 à 1000 lb/in² (1724 à 6895 kPa).

3. Procédé suivant la revendication 2, dans lequel la température est comprise dans l'intervalle de 140°C à 180°C et la pression est comprise dans l'intervalle de 550 à 800 lb/in² (3792 à 5516 kPa).

4. Procédé suivant l'une quelconque des revendications précédentes, dans lequel l'étape (ii) est mise en oeuvre à une température de 50° à 100°C pendant un temps de 0,5 à 4 heures.

5. Procédé suivant l'une quelconque des revendications précédentes, dans lequel l'oléfine est l'isobutylène.

6. Procédé suivant l'une quelconque des revendications précédentes, dans lequel le sulfure de métal alcalin est le sulfure de sodium.

7. Procédé suivant l'une quelconque des revendications précédentes, dans lequel l'oléfine sulfurée dépourvue de chlore possède une teneur en soufre de 40 à 50 % en poids.

8. Oléfine sulfurée dépourvue de chlore préparée par le procédé suivant l'une quelconque des revendications précédentes.

9. Composition d'huile lubrifiante comprenant une huile poly-alpha-oléfinique de viscosité propre à la lubrification dans laquelle est dissoute une quantité de 0,2 à 10,0 % en poids d'une oléfine sulfurée dépourvue de chlore préparée par le procédé suivant l'une quelconque des revendications 1 à 7.

10. Composition d'huile lubrifiante suivant la revendication 9, dans laquelle une quantité d'au moins environ 5 % en poids de l'oléfine sulfurée dépourvue de chlore est dissoute dans ladite huile.